**Europäisches Patentamt**

**European Patent Office**

**Office européen des brevets**

(19)

(11) Veröffentlichungsnummer: **0 313 551 B1**

(12) # EUROPÄISCHE PATENTSCHRIFT

(45) Veröffentlichungstag der Patentschrift:
18.09.91 Patentblatt 91/38

(51) Int. Cl.$^5$: **B60R 21/00**

(21) Anmeldenummer: **87901363.9**

(22) Anmeldetag: **28.02.87**

(86) Internationale Anmeldenummer:
**PCT/DE87/00078**

(87) Internationale Veröffentlichungsnummer:
**WO 88/00146 14.01.88 Gazette 88/02**

(54) **VORRICHTUNG ZUM AUSLÖSEN VON INSASSENSCHUTZSYSTEMEN.**

(30) Priorität: **27.06.86 DE 3621580**

(43) Veröffentlichungstag der Anmeldung:
**03.05.89 Patentblatt 89/18**

(45) Bekanntmachung des Hinweises auf die
Patenterteilung:
**18.09.91 Patentblatt 91/38**

(84) Benannte Vertragsstaaten:
**DE FR GB NL SE**

(56) Entgegenhaltungen:
EP-A- 156 930
DE-A- 2 113 973
DE-A- 2 808 872
FR-A- 2 291 064
FR-A- 2 522 302

(56) Entgegenhaltungen:
FR-A- 2 552 551
US-A- 3 213 683
US-A- 3 455 148
US-A- 3 911 391
US-A- 4 021 057
US-A- 4 317 105

(73) Patentinhaber: **ROBERT BOSCH GMBH**
**Postfach 50**
**W-7000 Stuttgart 1 (DE)**

(72) Erfinder: **CONDNE, Claus**
**Wadgasser Str. 65**
**W-6633 Wadgassen (DE)**
Erfinder: **MATTES, Bernhard**
**Querstr. 41**
**W-7123 Sachsenheim 1 (DE)**
Erfinder: **SCHMALZ, Dieter**
**Hohenzollernstr. 27**
**W-7127 Pleidelsheim (DE)**

EP 0 313 551 B1

Jouve, 18, rue Saint-Denis, 75001 PARIS

## Beschreibung

Die vorliegende Erfindung betrifft eine Vorrichtung zum Auslösen von Insassenschutzsystemen, insbesondere Rückhaltesysteme in Fahrzeugen bei deren Aufprall. Derartige Systeme sind z.B. aus der DE-C-2612 215 bekannt. Die Auslösung derartiger Systeme zum geeigneten Zeitpunkt bildet nun gewisse Schwierigkeiten. Einerseits muß wegen der Schnelligkeit der Bewegungsabläufe die Empfindlichkeit des Sensors so groß sein, daß z.B. bei einem Aufprall mit 50 km/Stunde sowohl das Registrieren des Aufpralls als auch die Sicherheitsmaßnahme selbst, wie das Gurtstrammen oder Kissenaufblasen innerhalb von 40 ms abgeschlossen ist. Andererseits darf aus naheliegenden Gründen ein Auslösen nicht erfolgen, wenn nur aufprallähnliche Kriterien am Sensor vorliegen, wie sie z.B. beim Fahren über ein Hindernis oder auch schon beim normalen Abbremsen des Fahrzeuges auftreten können. Außerdem ist zu beachten, daß unterhalb einer Beschleunigung von etwa — 4 g die Insassen sich auch ohne zusätzliche Haltemaßnahmen allein abstützen können, d.h. daß die Auslösung der Sicherheitseinrichtung sich in diesem Fall gefahrenerhöhend auswirken kann, wodurch das Gegenteil des eigentliches Zweckes bewirkt wird. Es hat sich herausgestellt, daß eine gefährliche Aufprallsituation vor allem dadurch gekennzeichnet, ist, daß die Polarität der Beschleunigung über einen deutlich größeren Zeitraum nicht wechselt im Gegensatz zu intensiven kurzzeitigen Beschleunigungen, wie sie z.B. bei der Fahrt über einen Bordstein oder auch einem Schlag mit einem Hammer auftreten. Hierbei wechselt die Beschleunigung in einem sehr kurzen Zeitraum mehrfach.

Um nun besser kritische Aufprallsituationen von unkritischen Aufprallsituationen trennen zu können, ist es u.a. aus der UP-A-37019034 bekannt, neben den Beschleunigungsaufnehmer einen Amplitudenbegrenzer, einen Integrator und eine Schwellwertschaltung vorzusehen. Der Amplitudenbegrenzer hat die Aufgabe, die Amplitude eines Stoßes nach oben zu begrenzen, so daß der nachfolgende Integrator die Schwellspannung des nachgeschalteten Schwellwertschalters nur bei Stößen mit starken, länger anhaltenden Beschlenigungen erreicht. Ist die Amplitude von Stößen zu klein, d.h. liegt sie unterhalb des von dem Amplitudenbegrenzer festgelegten Pegels, so erscheint am Eingang des Integrators kein Ausgangssignal. Der Integrator bewirkt zudem, daß die Auslösespannung für den nachgeschalteten Schwellwertschalter erst nach Ablauf einer vorbestimmten Zeit erreicht wird.

Nachteilig bei den bisher bekannten Systemen ist, daß sie bei niedrigen Beschleunigungen, wie sie beispielsweise beim schrägen Aufprall auftreten, nicht oder zu spät auslösen.

Anstatt der Verwendung eines Amplitudenbegrenzers ist weiterhin vorgeschlagen worden, von dem Ausgangswert des Beschleunigungsaufnehmers einen konstanten Wert abzuziehen. Da der Integrator so eingestellt ist, daß er ein negatives Ausgangssignal nicht abzugeben vermag, haben Ausgangssignale des Beschleunigigungsaufnehmers, die unterhalb der Schwellenspannung liegen keine Wirkung auf den Ausgang des Integrators.

Die EP-A-0156930 zeigt eine Vorrichtung zum Auslösen von Rückhaltesystemen in Kraftfahrzeugen bei deren Aufprall, bei der das Ausgangssignal eines Beschleunigungsaufnehmers in einem Integrator integriert wird, wobei das Ausgangssignal des Integrators das Insassenschutzsystem auslöst, sobald das Integrationsausgangssignal einen Auslöseschwellwert überschreitet. Dem Integrator wird dabei ein Integrationsschwellwert zugeführt, der durch eine veränderliche Größe gebildet ist, wobei durch die Differentiation des Ausgangssignals des Schwellwertschalters eine Verschiebung des Referenzwertes des Integrators bewirkt wird. Dabei wird der Integrationsschwellwert erst nach Überschreiten der Auslöseschwelle verändert, um auch bei kurzen Eingangsimpulsen ein sicheres Ansprechen und eine sichere Auslösung des Rückhaltesystems zu gewährleisten. Mit dieser Schaltungsanordnung kann ebenfalls nicht erreicht werden, daß bei vergleichsweise niedrigen Beschleunigungswerten, die beim Schrägaufprall auftreten, eine frühere, sichere Auslösung des Insassenschutzsystems erreicht wird.

Die genannten Systeme lösen nun zwar die Aufgabe, nur Beschleunigungen zu registrieren, welche oberhalb einer bestimmten Höhe und eines bestimmten Zeitraums liegen. Nachteilig bei diesen Systemen ist allerdings, daß sie bei niedrigen Beschleunigungen, wie sie beim schrägen Aufprall auftreten nicht oder zu spät auslösen, da durch den Abzug eines konstanten Wertes von dem gemessenen Beschleunigungssignal der verbleibende zu integrierende Beschleunigungswert zu spät oder überhaupt nicht zu einem Integrationswert führt, der die dem Integrator nachgeschaltete Auslöseschwelle des Systems überschreitet. Die vorliegende Erfindung geht daher aus von einer Vorrichtung zum Auslösen von Insassenschutzsystemen, insbesondere Rückhaltesystemen in Fahrzeugen bei deren Aufprall, bei der das um einen Integrationsschwellwert verminderte Ausgangssignal eines Beschleunigungsaufnehmers oder von diesem abgeleitete Signal in einem Integrator integriert wird, wobei das Ausgangssignal des Integrators ggf. über eine Endstufe das Insassenschutzsystem auslöst, sobald das Integratorausgangssignal einen Auslöseschwellwert überschreitet.

Aufgabe der Erfindung ist es, bei einer derartigen Vorrichtung Maßnahmen zu schaffen, die bei kritischen Aufprallvorgängen mit vergleichsweise niedrigen Beschleunigungswerten eine frühe, sichere Auslösung des Insassenschutzsystems gewährleisten.

Die gestellte Aufgabe wird durch die Erfindung nach Anspruch 1 gelöst. Im Prinzip besteht die Erfindung also darin, nicht mehr von dem Beschleunigungswert einen konstanten Wert abzuziehen, sondern diesen abzuziehenden Schwellwert von der jeweiligen Situation abhängig zu machen. Durch diese Maßnahme ist es möglich, den Nachteil zu überwinden, daß beim Abzug eines konstanten Schwellwertes der zu integrierende verbleibende Restwert sehr gering sein und damit die Integration recht lange dauern kann, bis das System schließlich ausgelöst wird. Bei derartigen niedrigen Beschleunigungswerten empfiehlt es sich vielmehr den abzuziehenden Schwellwert äußerst niedrig zu halten oder auf Null zu setzen, damit eine Auslösung schneller vorgenommen werden kann.

In Weiterbildung der Erfindung empfiehlt es sich, den Integrationsschwellwert in Abhängigkeit vom Ausgangssignal des Integrators zu ändern. Hierdurch kann die automatische Verstellung des Schwellwertes relativ einfach gehandhabt werden. Insbesondere empfiehlt es sich in Weiterbildung der Erfindung, daß sich der Integrationsschwellwert mit wachsendem Ausgangssignals des Integrators vergrößert und umgekehrt, d.h., daß bei niedrigem Ausgangswert des Integrators auch die abzuziehende Schwelle niedrig ist. Somit erhält man auch bei relativ niedrigen gemessenen Beschleunigungswerten einen verhältnismäßg steilen Anstieg des Ausgangssignals des Integrators in der Anfangsphase, da hinsichtlich der Integration nicht erst bis zum Überschreiten einer konstanten Schwellspannung gewartet werden muß. Dabei kann die Abhängigkeit des Integrationsschwellwertes vom Ausgangssignal des Integrators stetig verlaufen aber auch in Schritten stufenweise verlaufen. Auch andere Abhängigkeiten sind denkbar.

Eine besonders einfache Regelung des Integrationsschwellwertes erhält man dann, wenn dieser Wert dem Ausgangssignal des Integrators linear folgt, wobei hier noch geeignete Änderungsmöglichkeiten hinsichtlich der zeitlichen Verschiebung der beiden gleichlaufenden Signale bestehen.

Praktisch kann eine derartige Abhängigkeit der Signale dadurch erreicht werden, daß man das Ausgangssignal des Integrators über einen dieses Signal formenden Schwellwertgeber mittelbar an den Eingang des Integrators zurückgeführt. Vor den Eingang des Integrators ist ein Differenzglied geschaltet, welches den zurückgeführten Schwellwert von dem gemessenen Beschleunigungssignal abzieht oder von einem von diesem Beschleunigungssignal abgeleiteten Signal. Dieser Schwellwertgeber kann das Integratorausgangssignal mit zeitlicher Verzögerung zum Eingang des Integrators zurückführen, kann aber auch das Integratorausgangssignal mehr oder weniger verformen. Für den Fall, daß die zeitliche Verzögerung relativ gering und der abgegebene Schwellwert ein Abbild des Integratorausgangssignales ist, ergibt sich für das Ausgangssignal des Integrators im wesentlichen eine e-Funktion, da der von dem Beschleunigungseingangssignal abzuziehende Wert immer größer wird, bis schließlich die beiden Werte einander gleichen und der Eingangswert des Integrators zu Null wird. Zieht man aber wie vorgeschlagen worden war, einen konstanten Wert von dem gemessenen Beschleunigungssignal ab, so beginnt eine Integration erst in dem Moment, wenn wie das Eingangssignal den konstanten Schwellwert überschreitet. Steigt der Beschleunigungswert sehr schnell an, so wird das Integrationssignal auch sehr schnell steigen. Ist aber die Beschleunigung relativ niedrig, so kann der zu integrierende Differenzwert recht gering bleiben und somit der zur Auslösung notwendige Schwellwert am Ausgang des Integrators erst recht spät erreicht werden.

Ein besonders günstiges Auslöseverhalten läßt sich durch die in Anspruch 2 beschriebene Maßnahme erreichen. Es empfiehlt sich, die erfindungsgemäße Vorrichtung durch elektronische Baugruppen darzustellen. Dabei ist es nicht unbedingt notwendig, den sich ergebenen Regelkreis durch eine Rückführung des Ausgangssignals des Integrators an dessen Eingang zu bewirken, vielmehr kann das sich ergebene Tiefpaßverhalten auch durch eine anders aufgebaute, vorzugsweise elektronische Schaltung mit Tiefpaßverhalten nachgebildet werden.

Ein Ausführungsbeispiel der Erfindung wird nachfolgend anhand der Zeichnung erläutert. Darin zeigt

Figur 1    eine Vorrichtung, wie sie bereits vorgeschlagen wurde,
Figur 2    eine erfindungsgemäße Vorrichtung,
Figur 3    den Verlauf der Beschleunigung bei einem kritischen Aufprall,
Figur 4    ein von der Beschleunigung abgeleitetes Signal, welches zum Integratoreingang geführt wird und
Figur 5    das Ausgangssignal des Integrators.

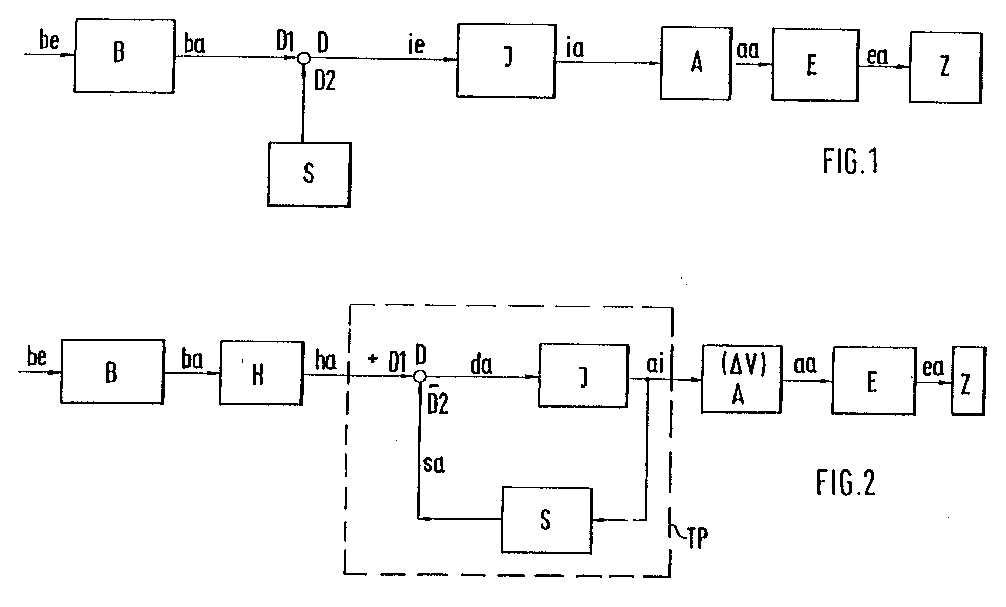

Figur 1 beschreibt eine Vorrichtung, wie sie bereits vorgeschlagen wurde und von der die Erfindung ausgeht. Ein Beschleunigungssignal be wird einem Beschleunigungsaufnehmer B zugeführt, der ein entsprechendes elektrisches Signal ba an einen ersten Eingang D1 eines Differenzgliedes D abgibt. Einem zweiten Eingang D2 des Differenzgliedes D wird ein konstanter Schwellwert zugeführt, welcher in dem Differenzglied D von dem Ausgangssignal ba des Beschleunigungsaufnehmers B abgezogen wird. Die Differenz der beiden Signale an D1 und D2 bildet das Eingangssignal ie des Integrators I. Sobald das Ausgangssignal ia des Integrators I einen bestimmten Schwellwert überschreitet, schaltet ein Auslöseschwellenschalter A durch, dessen Ausgangssignal aa über einen Verstärker das Insassenschutzsystem Z betätigt. Praktisch kann dabei so vorgegangen werden, daß das Ausgangssignal aa des Auslöseschwellenschalters A von dem Verstärker E verstärkt und evtl. umgeformt wird, wobei dann das Ausgangssignal ea des Verstärkers E eine Zündeinrichtung betätigt, welche zum Strammen eines Gurtes oder zum Aufblasen eines Luftsackes dient. Nachteilig bei dem vorbeschiebenen System ist, daß bei geringer Differenz zwischen D1 und D2 das Eingangssignal ie recht klein werden kann. Der durch den Auslöseschwellenschalter A festgelegte Schwellenwert aV wird somit durch ia erst sehr spät überschritten, wobei A ein Auslösesignal aa am Ausgang von A freigibt. Derartige Probleme treten insbesondere beim Auffahren auf ein vorausfahrendes Fahrzeug oder beim Schrägaufprall auf, also bei allen Fällen, bei denen zwar ein kritischer Aufprall vorliegt, die auftretende Geschwindigkeitsänderung aber nicht so hoch ist.

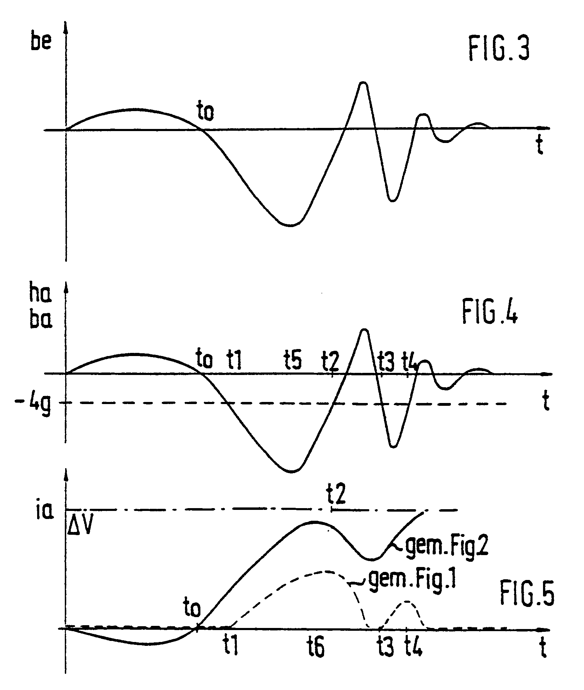

Figur 3 zeigt hierzu einen typischen Verlauf der Beschleunigung. Es wird angenommen, daß das zu dem Differenzglied D geführte Ausgangssignal des Beschleunigungsaufnehmers B zu be gleichartig verläuft (siehe Figur 4). Von ba wird nun wie aus Figur 4 ersichtlich über das Differenzglied D ein konstanter Schwellenwert —4 g abgezogen, der von einem Schwellwertgeber S abgegeben und dem zweiten Eingang D2 des Differenzgliedes D zugeführt wird.

Es tragen also nur die unterhalb der — 4 g — Linie liegenden Teile des Signals ba zu einer in positiver Richtung verlaufenden Änderung des Integrationssignals ia bei. Durch Schaltungsmaßnahmen ist sichergestellt, daß ia nicht negativ werden kann. In Figur 5 ist als gestrichelt gezeichnete Kurve der Verlauf des Signals ia am Ausgang des Integrators I in Abhängigkeit t dargestellt. Zum Zeitpunkt t1 unterschreitet ba den Schwellenwert — 4 g, so daß ie größer Null wird und die Summation beginnt. Zum Zeitpunkt t5 wächst der Integrationswert ia am stärksten, während zu dem nachfolgenden Zeipunkt t2 der Integrationswert ia seinen höchsten Wert erreicht hat. Nachfolgend sinkt ba unter — 4 g ab und ia vermindert sich dementsprechend, bis es an sich in den negativen Bereich übergehen müßte, was aber durch schaltungstechnische Maßnahmen verhindert wird. Zum Zeitpunkt t3 unterschreitet ba wieder die — 4 g Linie wodurch ia erneut positive Werte annimmt, die ab t4 wieder abnehmen, da ab diesem Zeitpunkt ba die 4 g Linie wieder überschreitet.

Wie aus Figur 5 ersichtlich, ist im Ergebnis festzustellen, daß der Schwellenwert ΔV des Auslöseschwellenschalters gemäß Figur 5 nicht erreicht wird und somit das Insassenschutzsystem Z nicht ausgelöst wird, obwohl b den Schwellenwert — 4 g mehrfach unterschreitet.

Figur 2 zeigt nun die erfindungsgemäße Ausgestaltung der Vorrichtung nach Figur 1. Der wesentliche Unterschied von Figur 2 gegenüber Figur 1 besteht darin, daß das Ausgangssignal ia des Integrators I über einen Schwellenwertgeber S an das Differenzglied D zurückge führt ist, so daß an dem zweiten Eingang D2 des Differenzgliedes D ein zeitlich veränderbarer, von ai gesteuerter Schwellenwert anliegt, der von dem Ausgangssignal ha abgezogen wird. Untersuchungen haben ergeben, daß sich durch eine derartige Konfiguration ein sehr viel günstigeres Ansprechverhalten des Insassenschutzsystems erreichen läßt als bei der Ausgestaltung nach Figur 1. Das liegt insbesondere darin, daß bei kleineren negativen Beschleunigungswerten, so lange ia noch vernachlässigbar gering ist, der volle Wert von ha auch integriert wird, so daß sich ia dem Schwellenwert ΔV sehr viel schneller nähert, als bei der Ausgestaltung nach Figur 1. Weiterhin ist die Ausgestaltung nach Figur 2 gegenüber der Ausgestaltung nach Figur 1 insofern abgeändert, als auch ia negative Werte erreichen kann. Dies ist für die Fälle wichtig, in denen einem Aufprall von vorn ein Aufprall von hinten ausgeht, indem etwa ein nachfolgendes Fahrzeug das gesicherte Fahrzeug auf eine stehende Fahrzeugkolonne aufschiebt. In diesen Fällen wird zu dem dann positiven Wert ha kein Schwellenwert abgezogen sondern ein Schwellenwert sa mit umgekehrter polarität hinzugefügt, so daß auch hier bei Änderung der Beschleunigungsrichtung eine beschleunigte Integration in Richtung auf den Schwellenwert ΔV stattfindet. Kennzeichnend für ein derartiges Verhalten ist der Verlauf der ausgezogenen Kurve ia vor dem Zeitpunkt t0. Wie aus Figur 5 weiterhin ersichtlich, beginnt der Anstieg von ia in der erfindungsgemäßen Schaltungsanordnung (siehe ausgezogene Linie in Figur 5) schon im Zeitpunkt t0 statt im Zeitpunkt t1 gemäß dem Beispiel nach Figur 1. Der Schwellwert sa folgt erfindungsgemäß dem Signal ia, wobei im Zeitpunkt t6 ha ebenso groß ist wie sa, so daß das Integrationssignal einen ersten Höchstwert erreicht hat. Danach überwiegt wegen der zeitlichen Verzögerung oder einer entsprechenden Einstellung des Schwellwertgebers S das Schwellwertsignal sa gegenüber dem modifizierten Beschleunigungssignal ha, so daß der Integrationswert ia wieder abnimmt. Der später aufgrund des sinkenden Werts von ai wieder sinkende Schwellwert sa führt in Verbindung mit einem wieder wachsenden Ausgangssignal ha zu einem Anstieg des Integrationssignals, bis dieses schließlich den Schwellwert ΔV überschreitet und damit das Insassenschutzsystem Z auslöst.

Eine weitere wichtige Änderung der Schaltungsanordnung nach Fig. 2 gegenüber der nach Fig. 1 besteht in der Verwendung eines Hochpasses H, der zwischen den Beschleunigungsaufnehmer B und das Differenzglied D geschaltet ist. Dieser Hochpaß unterdrückt langsame Änderungen der Beschleunigungen, etwa Beschleunigungsänderungen mit einer Frequenz unterhalb 1 Hz. Diese Maßnahme dient vor allen Dingen dazu, mehr oder weniger starke Brems- bzw. Beschleunigungsvorgänge zu unterdrücken, welche während des normalen Fahrbetriebs auftreten, die aber unkritisch sind und zu keiner Auslösung des Schutzsystems führen sollen. Desgleichen können durch den Hochpaß langsame Änderungen des Ausgangssignals ba aufgrund des Temperaturverhaltens des Beschleunigungsaufnehmers B unterdrückt werden.

Wertet man das Verhalten der erfindungsgemäßen Schaltung nach Fig. 2 im Sinne der Regeltechnik mathematisch aus, so ergibt sich folgende Funktion $i_a = \int (h_a - c \cdot ia) \, dt$, wobei c eine Konstante bildet. Durch die Laplace-Transformation folgt :

$P \cdot i_a = h_a - i_a \cdot c$. Daraus ergibt sich die Übertragungsfunktion

$$F(P) = \frac{ia}{ha} = \frac{1}{C + P}$$

Dies ist die Übertragungsfunktion eines Tiefpasses, so daß für den die zuerst genannte mathematische Funktion erfüllenden Regelkreis ganz allgemein ein elektrischer Tiefpaß eingesetzt werden kann. Für diesen Tiefpaß ist es aber nicht notwendig, daß er den in Fig. 2 durch gestrichelte Umrahmung dargestellten Aufbau des Tiefpasses TP hat, sondern es kann ganz allgemein eine vorzugsweise elektrisch oder elektronisch arbeitende Schaltung mit dem Verhalten eines Tiefpasses gewählt werden, um die Vorteile gemäß der Erfindung zu erreichen. Eine Tiefpaßfunktion läßt sich aber mit erheblich weniger Aufwand erreichen als der in Fig. 2 dargestellte Tiefpaß TP.

Der Vorteil der Erfindung liegt somit darin, daß durch den Integrator schon relativ geringe Beschleunigungssignale aufintegriert werden. Durch die zeitlich versetzte Erhöhung des Schwellwertes $s_a$ wird gewährleistet, daß das Ausgangssignal des Integrators $i_a$ beim Aufprallen mit zu geringen Geschwindigkeiten die Auslöseschwelle $\Delta V$ nicht erreicht z.B. beim Frontalaufprall mit Geschwindigkeiten kleiner als 15 km/h. Da bei geringen Beschleunigungen bereits wegen des fehlenden konstanten Schwellwertes schon ein ia-Signal vorhanden ist, wird die Auslöseschwelle bei weiter ansteigendem Beschleunigungssignal schneller erreicht. Dadurch wird insbesondere bei Schrägaufprall von Fahrzeugen mit wenig steifen Vorderwagen (Leichtbauweise), die Rückhalteeinrichtung früher aktiviert und eine bessere Schutzwirkung erreicht. Der Beschleunigungsaufnehmer B erfaßt sowohl Verzögerungen als auch Beschleunigungen. Das ist wichtig, um Hammerschläge und Geschwindigkeitsänderungen des Fahrzeugs während des Aufpralls richtig bewerten zu können, da das Fahrzeug während des Aufpralls regelmäßig ein Schwingungsverhalten zeigt und da weiterhin ein Frontalaufprall vielfach durch einen Stoß in das Fahrzeugheck eingeleitet wird. Es ist weiterhin zu beachten, daß bei normalem Fahrbetrieb relativ geringe Verzögerungen und Beschleunigungen auftreten (in der Größenordnung $\leq 1,0$ g), die keinen Einfluß auf das ia-Signal haben. Dieses Signal ist daher und auch zusätzlich noch durch die Wirkungsweise des Hochpasses H unabhängig von der Ausgangsgeschwindigkeit des Fahrzeugs. Die alleinige Einflußgröße ist der Beschleunigungsverlauf während des Aufpralls, so daß die Motorbeschleunigung oder das übliche Bremsen keinen Einfluß auf die Auslösung des Sicherheitssystems haben.

## Patentansprüche

1. Vorrichtung zum Auslösen von Insassenschutzsystemen (Z) insbesondere Rückhaltesystemen in Fahrzeugen bei deren Aufprall, bei der das um einen Integrationsschwellwert (sa) verminderte Ausgangssignal (ba) eines Beschleunigungsaufnehmers (B) oder von diesem abgeleitete Signal (ha) in einem Integrator (I) integriert wird, wobei das Ausgangssignal (ia) des Integrators (I) gegebenenfalls über eine Endstufe (E) das Insassenschutzsystem (Z) auslöst, sobald das Integrationsausgangssignal (ia) einen Auslöseschwellwert (A) überschreitet, wobei der Integrationsschwellwert (s) durch eine veränderliche Größe gebildet ist und bei der ein vom Ausgangssignal (ia) des Integrators (I) gesteuerter Schwellwertgeber (S) vorgesehen ist, dadurch gekennzeichnet, daß das Ausgangssignal des Schwellwertgebers (S) als Integrationsschwellwert (sa) einem zweiten Eingang (D2) eines Differenzgliedes (D) zugeführt wird, dessen erstem Eingang (D1) das Ausgangssignal (ba) des Beschleunigungsaufnehmers (B) gegebenenfalls über einen Hochpaß (H, ha) zugeführt ist, und daß das die Differenz zwischen den Eingangssignalen (ha, D1 bzw. sa, D2) des Differenzgliedes (D) darstellende Ausgangssignal (da) des Differenzgliedes dem Eingang des Integrators (I) zugeführt ist.

2. Vorrichtung nach Anspruch 1, dadurch gekennzeichnet, daß die Abhängigkeit des Ausgangssignals (sa) des Schwellwertgebers (S) von dem Ausgangssignal (ia) des Integrators derart eingestellt ist, daß die Einheit (TP) aus Differenzglied (D), Integrator (I) und Schwellwertgeber (S) gegenüber dem am ersten Eingang (D1) des Differenzgliedes (D) anliegenden Signal (ba bzw. ha) als Tiefpaß erscheint, dessen Ausgang durch den Ausgang (ia) des Integrators (I) gebildet ist.

3. Vorrichtung nach einem der Ansprüche 1 und 2, dadurch gekennzeichnet, daß der Ausgang des Integrators (I) über einen Auslöseschwellenschalter (A) und einen Endverstärker (E) eine Betätigungseinrichtung (Z) des Insassenschutzsystems auslöst, wobei der Auslöseschwellenschalter (A) gegenüber seinem Ausgang (aa) für unterhalb eines Schwellwertes (V) liegende Eingangssignale (ia) gesperrt ist.

4. Vorrichtung nach einem der Ansprüche 1 bis 3, dadurch gekennzeichnet, daß zwischen dem gegebenenfalls über einen Hochpaß (H) geführten Ausgang (ha bzw. ba) eines Beschleunigungsaufnehmers (B) und den Eingang eines bei Überschreiten eines Schwellwertes das Insassenschutzsystem auslösenden Auslöseschwellwertschalters (A) ein elektrischer Tiefpaß (TP) geschaltet ist.

5. Vorrichtung nach einem der Ansprüche 1 bis 4, dadurch gekennzeichnet, daß sich der Integrationsschwellwert (sa) in Ahängigkeit vor dem Ausgangssignal (ia) des Integrators (I) ändert.

6. Vorrichtung nach einem der Ansprüche 1 bis 5, dadurch gekennzeichnet, daß sich der Integrationsschwellwert (sa) mit wachsendem Ausgangssignal (ia) des Integrators vergrößert und umgekehrt.

7. Vorrichtung nach einem der Ansprüche 1 bis 6, dadurch gekennzeichnet, daß bei steigendem Ausgangssignal (ia) des Integrators (I) der Integrationsschwellwert (sa) kontinuierlich erhöht wird.

8. Vorrichtung nach einem der Ansprüche 1 bis 7, dadurch gekennzeichnet, daß bei steigendem Ausgangssignal (ia) des Integrators (I) der Integrationsschwellwert (sa) stufenweise erhöht wird.

9. Vorrichtung nach einem der Ansprüche 1 bis 8, dadurch gekennzeichnet, daß der Integrationsschwellwert (sa) dem Ausgangssignal (ia) des Integrators (I) linear folgt.

## Claims

1. Device for triggering vehicle occupant protection systems (Z) in particular restraining systems, in vehicles in the event of their experiencing impact, in which the output signal (ba), decreased by an integration threshold value (sa), of an acceleration sensor (B) or the signal (ha) derived from the latter is integrated in an integrator (I), the output signal (ia) of the integrator (I) triggering, possibly by means of a final stage (E), the vehicle occupant protection system (Z), as soon as the integration output signal (ia) exceeds a trigger threshold value (A), the integration threshold value (s) being formed by a variable, and in which a threshold value generator (S) controlled by the output signal (ia) of the integrator (I) is provided, characterised in that the output signal of the threshold value generator (S) is fed as an integration threshold value (sa) to a second input (D2) of a differentiating element (D), the first input (D1) of which is fed the output signal (ba) of the acceleration sensor (B), possibly via the highpass filter (H, ha), and in that the output signal (da) of the differentiating element, which signal represents the difference between the input signals (ha, D1 and sa, D2, respectively) of the differentiating element (D), is fed to the input of the integrator (I).

2. Device according to Claim 1, characterised in that the dependency of the output signal (sa) of the threshold value generator (S) is adjusted in such a way by the output signal (ia) of the integrator that the unit (TP) constituted by the differentiating element (D), integrator (I) and threshold value generator (S) appears as a lowpass filter with respect to the signal (ba or ha) present at the first input (DI) of the differentiating element (D), the output of which lowpass filter is formed by the output (ia) of the integrator (I).

3. Device according to one of Claims 1 and 2, characterised in that the output of the integrator (I) triggers an actuation device (Z) of the vehicle occupant protection system via a trigger threshold switch (A) and an output amplifier (E), the trigger threshold switch (A) being locked with respect to its output (aa) for input signals (ia) lying below a threshold value (V).

4. Device according to one of Claims 1 to 3, characterised in that an electrical lowpass filter (TP) is connected between the output (ha and ba, respectively), connected via a highpass filter (H), of an acceleration sensor (B) and the input of a trigger threshold value switch (A) which triggers the vehicle occupant protection system when a threshold value is exceeded.

5. Device according to one of Claims 1 to 4, characterised in that the integration threshold value (sa) changes as a function of the output signal (ia) of the integrator (I).

6. Device according to one of Claims 1 to 5, characterised in that the integration threshold value (sa) increases with a rising output signal (ia) of the integrator, and vice versa.

7. Device according to one of Claims 1 to 6, characterised in that when the output signal (ia) of the integrator (I) is rising the integration threshold value (sa) is increased continuously.

8. Device according to one of Claims 1 to 7, characterised in that when the output signal (ia) of the integrator (I) is rising the integration threshold value (sa) is increased in increments.

9. Device according to one of Claims 1 to 8, characterised in that the integration threshold value (sa) follows the output signal (ia) of the integrator (I) linearly.

EP 0 313 551 B1

## Revendications

1. Dispositif pour le déclenchement des systèmes de protection des occupants d'une voiture, en particulier des systèmes de retenue dans des véhicules lors de la collision dans lequel le signal de sortie (ba) d'un enregistreur d'accélération (B) diminué d'une valeur de seuil d'intégration (sa) ou un signal (ha) dérivé du précédent est intégré dans un intégrateur (I), le signal de sortie (ia) de l'intégrateur (I) déclenchant le cas échéant via un étage final (E) le système de protection des occupants (Z), aussitôt que le signal (ia) de sortie d'intégration franchit une valeur de seuil de déclenchement (A), la valeur de seuil d'intégration (s) étant formée par un paramètre variable et un transmetteur de valeur de seuil (S) étant prévu, piloté par le signal de sortie (ia) de l'intégrateur (I), dispositif caractérisé en ce que le signal de sortie du transmetteur (S) de valeur de seuil est acheminé en tant que valeur (sa) de seuil d'intégration à une deuxième entrée (D2) d'un élément différentiel (D), à la première entrée (D1) duquel est acheminé le signal de sortie (ba) de l'enregistreur d'accélération (B) le cas échéant via un filtre passe-haut (H, ha) et en ce que le signal de sortie (da) de l'élément différentiel représentant la différence entre les signaux d'entrée (ha, D1 ou sa, D2) de l'élément différentiel (D) est acheminé à l'entrée de l'intégrateur (I).

2. Dispositif selon la revendication 1, caractérisé en ce que la dépendance du signal de sortie (sa) du transmetteur de valeur de seuil (S) par rapport au signal de sortie (ia) de l'intégrateur est réglée de telle sorte que l'unité (TP) formée de l'élément différentiel (D), de l'intégrateur (I) et du transmetteur de valeur de seuil (S) joue le rôle d'un filtre passe-bas par rapport au signal (ba ou ha) se trouvant à la première entrée (D1) de l'élément différentiel (D), filtre dont la sortie est constituée par la sortie (ia) de l'intégrateur (I).

3. Dispositif selon l'une des revendications 1 et 2, caractérisé en ce que la sortie de l'intégrateur (I) déclenche un dispositif d'actionnement (Z) du système de protection des occupants via un circuit (A) à seuil de déclenchement et un amplificateur final (E), le circuit (A) à seuil de déclenchement étant bloqué par rapport à sa sortie (aa) pour des signaux d'entrée (ia) se trouvant en-dessous d'une valeur de seuil (V).

4. Dispositif selon l'une des revendications 1 à 3, caractérisé en ce qu'entre la sortie (ha ou ba) d'un enregistreur (B) d'accélération acheminée le cas échéant via un filtre passe-haut (H) et l'entrée d'un circuit (A) à valeur de seuil de déclenchement déclenchant le système de protection des occupants lors d'un dépassement d'une valeur de seuil est branché un filtre électrique passe-bas (TP).

5. Dispositif selon l'une des revendications 1 à 4, caractérisé en ce que la valeur de seuil d'intégration (sa) se modifie en fonction du signal de sortie (ia) de l'intégrateur.

6. Dispositif selon l'une des revendications 1 à 5, caractérisé en ce que la valeur de seuil d'intégration (sa) augmente avec le signal de sortie croissant (ia) de l'intégrateur et inversement.

7. Dispositif selon l'une des revendications 1 à 6, caractérisé en ce que lors d'un signal de sortie croissant (ia) de l'intégrateur (I) la valeur de seuil d'intégration (sa) augmente continuellement.

8. Dispositif selon l'une des revendications 1 à 7, caractérisé en ce que lors d'un signal de sortie (ia) de l'intégrateur (I) croissant la valeur de seuil d'intégration (sa) augmente par paliers.

9. Dispositif selon l'une des revendications 1 à 8, caractérisé en ce que la valeur de seuil d'intégration (sa) suit linéairement le signal de sortie (ia) de l'intégrateur (I).

7

EP 0 313 551 B1

be → [ B ] ba → D1 · D ie → [ J ] ia → [ A ] aa → [ E ] ea → [ Z ]

D2

[ S ]

FIG.1

be → [ B ] ba → [ H ] ha → + D1 · D da → [ J ] ai → [ (ΔV) A ] aa → [ E ] ea → [ Z ]

D2

sa

[ S ]

TP

FIG.2

be

FIG.3

to

t

ha
ba

FIG.4

to t1    t5   t2    t3 t4

t

−4g

ia

t2

ΔV

gem.Fig2

gem.Fig.1

FIG.5

to

t1        t6      t3 t4        t